# EUROPEAN PATENT SPECIFICATION

(11) **EP 2 047 324 B1**
(45) Date of publication and mention of the grant of the patent: **01.02.2012**
(21) Application number: 07835992.4
(22) Date of filing: 06.07.2007
(51) Int. Cl.: G02F 1/1335, G02F 1/13357

(54) **PHOTO-LUMINESCENCE COLOR LIQUID CRYSTAL DISPLAY**
FARBIGE PHOTOLUMINESZIERENDE FLÜSSIGKRISTALLANZEIGE
AFFICHAGE À CRISTAUX LIQUIDES COULEURS A PHOTOLUMINESCENCE

(30) Priority: 06.07.2006 US 819420 P; 03.07.2007 US 824979
(43) Date of publication of application: 15.04.2009
(73) Proprietor: Intematix Corporation, Fremont CA 94538 (US)
(72) Inventor: LI, Yi-Qun, Danville, CA 94506 (US); DONG, Yi, Tracy, CA 95376 (US); SHAN, Wei, Fremont, California 94555 (US)
(74) Representative: Köllner, Malte
(86) International application number: PCT/US2007/015515
(87) International publication number: WO 2008/005508

(56) References cited:
- EP-A- 1 256 835
- WO-A2-2006/108013
- JP-A- 2003 043 483
- JP-A- 2007 178 902
- US-A- 5 926 239
- US-A1- 2001 038 426
- US-A1- 2002 063 813
- US-A1- 2006 111 981
- US-B1- 6 295 106
- US-B1- 6 586 874
- KANG H S ET AL: "Eu-doped barium strontium silicate phosphor particles prepared from spray solution containing NH4Cl flux by spray pyrolysis" MATERIALS SCIENCE AND ENGINEERING B, ELSEVIER SEQUOIA, LAUSANNE, CH, vol. 121, no. 1-2, 25 July 2005 (2005-07-25), pages 81-85, XP025304541 ISSN: 0921-5107 [retrieved on 2005-07-25]

## Description

### CROSS REFERENCE TO RELATED APPLICATION

This Application claims the benefit of priority to U.S. Provisional Application. No. 60/819,420 filed July 6, 2006 .

### BACKGROUND OF THE INVENTION

### Field of the Invention

The present invention relates to the field of color displays, such as flat panel displays and color liquid crystal displays (LCDs), which convert electrical signals into color images. In particular, the invention concerns color, transmissive LCDs in which phosphor, photo-luminescent, materials are used to generate color light in response to excitation radiation from a backlight, such displays being termed photo-luminescence color LCDs or photo-luminescent color LCDs.

### Description of the Related Art

The light that lights up our world and allows us to see comes from solar energy in what is known as the visible region of the solar, electromagnetic, spectrum. This region is a very narrow segment of the total spectrum, the visible region being that portion visible to the human eye. It ranges in wavelength from about 440 nm in the extreme blue or near ultraviolet to about 690 nm in the red or near infrared. The middle of the visible region is a green color at about 555 nm. Human vision is such that what appears as white light is really composed of weighted amounts of a continuum of so-called black body radiation. In order to produce light that appears "white" to a human observer, the light needs to have component weights of about 30 per cent in the red (R), 59 per cent in the green (G) and 11per cent in the blue (B).

The perception of light as being white can be maintained even when the amount of one of the RGB component colors is changed, as long as the amounts of the other two can be adjusted to compensate. For example, if the red light source is shifted to a longer wavelength, the white light will appear more cyan in color if the other two colors remain unchanged. White balance may be restored, however, by changing the weight of the green and blue to levels other than their original values of 11 and 59 per cent, respectively. The human eye does not have the ability to resolve closely spaced colors into the individual red, green, and blue (RGB) primary components of white light, since the human vision system mixes these three components to form intermediates. The reader probably recalls that human vision registers (and/or detects) only the three primary colors, and all other colors are perceived as combinations of these primaries.

Color liquid crystal displays (LCDs) in use today are based on picture elements, or "pixels," formed by a matrix/array of liquid crystal (LC) cells. As is known the intensity of the light passing through a LC can be controlled by changing the angle of polarization of the light in response to an electrical field, voltage, applied across the LC. For a color LCD each pixel is actually composed of three "sub-pixels": one red, one green, and one blue. Taken together, this sub-pixel triplet makes up what is referred to as a single pixel. What the human eye perceives as a single white pixel is actually a triplet of RGB sub-pixels with weighted intensities such that each of the three sub-pixels appears to have the same brightness. Likewise, when the human eye sees a solid white line, what is actually being displayed is a series or line of RGB triplets. The multi-sub-pixel arrangement may be manipulated by tuning the photometric output of the light source to a set of desired color coordinates, thereby offering a superior color rendering index (CRI) and a dynamic color selection for a large color palette.

In current color, transmissive LCD technology, this color tuning is implemented with the use of color filters. The principle of operation of a conventional color, transmissive LCD is based upon a bright white light backlighting source located behind a liquid crystal (LC) matrix, and a panel of color filters positioned on an opposite side of the liquid crystal matrix. The liquid crystal matrix is digitally switched to adjust the intensity of the white light from the backlighting source reaching each of the color filters of each pixel, thereby controlling the amount of colored light transmitted by the RGB sub-pixels. Light exiting the color filters generates the color image.

A typical LCD structure is sandwich-like in which the liquid crystal is provided between two glass panels; one glass panel containing the switching elements that control the voltage being applied across electrodes of the LC corresponding to respective sub-pixel, and the other glass panel containing the color filters. The switching elements for controlling the LC matrix which are located on the back of the structure, that is facing the backlighting source; typically comprise an array of thin film transistors (TFTs) in which a respective TFT is provided for each sub-pixel. The color filter glass panel is a glass plate with a set of primary (red, green, and blue) color filters grouped together. Light exits the color filter glass panel to form the image.

As is known LCs have the property of rotating the plane of polarization of light as a function of the applied electric field, voltage. Through the use of polarizing filters and by controlling the degree of rotation of the polarization of the light as a function of the voltage applied across the LC the amount of white light supplied by the backlighting source to the filters is controlled for each red, green and blue sub-pixel. The light transmitted through the filters generates a range of colors for producing images that viewers see on a TV screen or computer monitor.

Typically, the white light source used for backlighting comprises a mercury-filled cold cathode fluorescent lamp (CCFL). CCFL tubes are typically glass, and filled with inert gases. The gases ionize when a voltage is applied across electrodes positioned within the tube, and the ionized gas produces ultraviolet (UV) light. In turn, the UV light excites one or more phosphors coated on the inside of the glass tube, generating visible light. Reflectors redirect the visible light to the monitor and spread it as uniformly as possible, backlighting the thin, flat LCD. The backlight itself has always defined the color temperature and color space available, which has typically been approximately 75 per cent of NTSC (National Television Standards Committee) requirements.

In the known LCD systems, the color filter is a key component for sharpening the color of the LCD. The color filter of a thin film transistor liquid crystal display (TFT LCD) consists of three primary colors (RGB) which are included on a color filter plate. The structure of the color filter plate comprises a black (opaque) matrix and a resin film, the resin film containing three primary-color dyes or pigments. The elements of the color filter line up in one-to-one correspondence with the unit pixels on the TFT-arrayed glass plate. Since the sub-pixels in a unit pixel are too small to be distinguished independently, the RGB elements appear to the human eye as a mixture of the three colors. As a result, any color, with some qualifications, can be produced by mixing these three primary colors.

The development over recent years of high brightness light emitting diodes (LEDs) has made possible LED backlighting with an enhanced color spectrum and has been used to provide a wider range of spectral colors for displays. In addition, LED backlighting has allowed for a tuning of the white point, when allied with a feedback sensor, ensuring the display operates consistently to a pre-defined performance.

In these LED based backlighting systems, the light output from red, green and blue (RGB) LEDs is mixed in equal proportions to create white light. This approach unfortunately requires complex driving circuitry to properly control the intensities of the three different color LEDs since different circuitry is necessary because each of the LEDs demands different drive conditions.

An alternative approach has been to use a white emitting LED which comprises a single blue LED chip coated with a yellow fluorescent phosphor; the yellow phosphor absorbing a proportion of the blue light emitted by the blue LED, and then re-emitting that light (in a process known as down-conversion) as yellow light. By mixing the yellow light generated by the yellow phosphor with the blue light from the blue LED, white light over the entire visible spectrum could be produced. Alternatively, an ultraviolet LED can be coated with a red-green-blue phosphor to produce white light; in this case, the energy from the ultraviolet LED is substantially non-visible, and since it cannot contribute a component to the resultant white light, it functions only as an excitation source for the phosphors. Unfortunately the white light product of such LEDs does not match well with the color filters used in current LCDs, and a significant amount of the backlight intensity is wasted.

US patent US 4,830,469 proposes a LCD which uses UV light to excite red, green and blue light emitting phosphor pixels thereby eliminating the need for RGB color filters. Such LCDs are referred to as photo-luminescence color LCDs. A mercury lamp emitting UV light of wavelength 360 to 370 nm is used as a backlight and the red, green and blue emitting phosphors are provided on a front substrate plate. The UV light after being modulated by the liquid crystal matrix is then incident on the phosphor sub-pixels of the front plate which emit red, green and blue light in response.

US 6,844,903 teaches a color, transmissive LCD which supplies a uniform blue light of wavelength 460 nm to the back of the liquid crystal layer. The blue light, after being modulated by the liquid crystal layer, is then incident on the back surface of phosphor material located above the liquid crystal layer. A first phosphor material, when irradiated with the blue light, generates red light for the red pixel areas of the display, and a second phosphor material, when irradiated with the blue light, generates green light for the green pixel areas of the display. No phosphor material is deposited over the blue pixel areas since blue light is provided from the backlight. A suitable diffuser (e.g. scattering powder) can be located at the blue sub-pixel areas so that the blue pixels match the viewing angle properties of the red and green pixels.

US 2006/0238103 and US 2006/0244367 teach photo-luminescence color LCDs which respectively use UV light of wavelength 360 to 460 nm and a near blue-UV light of wavelength 390 to 410 nm to excite red, green and blue light emitting phosphor pixels. The use of near blue-UV backlighting reduces deterioration of liquid crystals caused by UV light.

A further example of a photo-luminescence color LCD is disclosed in JP 2004094039.

Document JP 2003-43483 discloses a photo-luminescence liquid crystal display comprising a display panel, a radiation source based on blue light-emitting diodes and a photo-luminescence layer including red and green phosphor materials, the latter being arranged on the back plate of the display panel so as to form red and green sub-pixels; apertures are formed above some of the blue light-emitting diodes in order to create blue sub-pixels.

Document US 2002/0063813 also discloses a photo-luminescence liquid crystal display, wherein the radiation source is a gas discharge vessel that generates ultraviolet excitation radiation. Red, green and blue phosphor materials are arranged between the gas discharge vessel and the back plate of a liquid crystal display panel and convert the ultraviolet excitation radiation into red, green and blue light.

Document US 2006/0027785 discloses novel yellow-green phosphors made of a silicate-based compound having at least one divalent alkaline-earth element, chosen among strontium, calcium, barium and magnesium; the compound is doped with a halogen, such as fluorine, and is activated by divalent europium. These phosphors are capable of efficiently converting blue light into yellow and green light.

The present invention concerns photo-luminescence color LCDs which utilize a phosphor material to generate the different colors of light of the sub-pixels. What is needed in the art is an LCD display that uses an RGB phosphor-based color rendering scheme to sharpen the color and enhance the brightness of the image.

### SUMMARY OF THE INVENTION

Embodiments of the present invention are directed to low-cost, high energy conversion efficiency color LCDs having enhanced color rendering. A LCD in accordance with the invention enables images with a high brightness and a 'spectacular, vivid range of colors to be realized. Such enhanced LCDs have applications in a variety of electronics devices including, but not limited to, televisions, monitors and computer monitors, the view screens of satellite navigation systems and hand-held devices such as mobile telephones and personal video /music systems.

In the most general configuration, a display system of the present embodiments comprises a red-green (RG) or red-green-blue (RGB) phosphor panel for generating the image to be displayed; and a monochromatic or quasi-monochromatic short-wavelength light source for exciting the phosphors of the phosphor panel, as defined in the appended claims.

According to the invention there is provided a photo-luminescence liquid crystal display according to the appended claim 1.

The radiation source is either a blue-emitting LED with an excitation wavelength ranging from about 400 to about 480 nm, or a UV LED with an excitation wavelength ranging from about 360 to 400 nm. In further examples, not falling under the scope of the claims, the radiation source may also comprise a UV emission line generated by a mercury (Hg) plasma discharge (the plasma may also come from an inert gas such as Xe or Ne) as the backlighting source, and the UV emission line may be centered about 254 nm. Alternative, in further examples not falling under the scope of the claims, the monochromatic or quasi-monochromatic excitation source may have a wavelength with the range 147 to 190 nm.

In general, the monochromatic or quasi-monochromatic excitation source may be classified into one of two groups: 1) that having a wavelength ranging from about 200 to about 430 nm, and 2) that having a wavelength ranging from about 430 to 480 nm. In any event, these may be called short-wavelength backlighting sources.

When the excitation source is operable to emit UV excitation radiation the LCD further comprises a blue phosphor material which emits blue light in response to excitation radiation, the blue phosphor material being provided on the back plate corresponding to blue pixel areas.

The matrix of electrodes can comprise an array of thin film transistors (TFTs), one thin film transistor corresponding to each pixel. The TFTs can be provided on the front or back plates of the display.

The phosphor materials can be provided on lower or upper faces of the back plate.

The LCD can further comprise a first polarizing filter layer on the front plate and a second polarizing filter layer on the back plate and wherein the orientation of the direction of polarization of the first polarizing filter layer is perpendicular to the direction of polarization of the second polarizing filter layer.

When the radiation source is a LED that emits blue light having a wavelength in a range of 400 to 480 nm, the red phosphor has the formula (Sr,Ba,Mg,Al)₃SiO₅:Eu²⁺,F and the green phosphor has the formula (Sr,Ba,Mg)₂SiO₄:Eu²⁺,F.

Alternatively, when the radiation source is a UV emitting LED that emits light having a wavelength in a range 360 to 400 nm, the red phosphor has the formula selected from (Sr,Ba,Mg,Al)₃SiO₅:Eu²⁺,F, Ca₂NaMg₂V₃O₁₂:Eu³⁺ or YVO₄:Eu; the green phosphor has the formula (Sr,Ba,Mg)₂SiO₄:Eu²⁺,F or (Ba,Eu)(Mg,Mn)Al₁₀O₁₇; and the blue phosphor has the formula BaMgAl₁₀O₁₇:Eu, (Sr,Ca,Ba,Mg)₁₀(PO₄)₆Cl₂:Eu, (Ba,Sr,Eu)(Mg,Mn)Al₁₀O₁₇, Sr₁₀(PO₄)₆Cl₂:EU, or (Ba,Eu)MgAl₁₀O₁₇.

In a further example, not claimed, when the excitation radiation comprises UV light having a wavelength of order 254 nm the red phosphor can have a formula Y₂O₃:Eu or YVO₄:Eu; the green phosphor can have a formula LaPO4:Ce,Tb, (Ce, Tb)(Mg)Al₁₁O₁₉, or (Ba,Eu)(Mg,Mn)Al₁₀O₁₇; and the blue phosphor can have a formula (SrCaBaMg)₅(PO₄)₃Cl:Eu, (Ba, Eu) Mg₂Al₁₆O₂₇, (Ba,Sr,Eu)(Mg,Mn)Al₁₀O₁₇, or Sr₁₀(PO₄)₆Cl₂:Eu, (Ba,Eu)MgAl₁₀O₁₇.

In a yet further example, not claimed, when the radiation source is a plasma emitting light having a wavelength in a range 147 to 190 nm the red phosphor can have a formula (Y,Gd)BO₃:Eu and the green phosphor can have a formula Zn₂SiO₄:Mn.

The current LCD technology that employs color filters has only about a 10 to 20 per cent efficiency of light output that is achievable at the front of a liquid crystal display. By contrast, the present embodiments using a phosphor-based color rendering scheme, including using red-green phosphor elements plus blue LED illumination, can have up to 90 per cent efficiency of light output. With a broader color range, phosphors and LED backlight together render truer skin tones and vivid reds and greens, offering better contrast ratios, purity and realism, and meeting new consumer expectations.

### BRIEF DESCRIPTION OF THE DRAWINGS

In order that the present invention is better understood embodiments of the invention will now be described, by way of example only, with reference to the accompanying drawings in which:
Figure 1 is a schematic cross-sectional representation of a photo-luminescence color LCD according to the invention;
Figure 2a is a schematic diagram of a unit pixel of a phosphor color-elements plate of the display of Figure 1;
Figure 2b is a schematic diagram of a unit pixel of a phosphor color-elements plate of the display of Figure 3;
Figure 3 is a schematic cross-sectional representation of an alternative embodiment of the configuration shown in Figure 1;
Figure 4 shows schematic normalized emission spectra for red, green, and blue light generated by LJV and blue light excited phosphors;
Figure 5 is a schematic cross-sectional representation of a further photo-luminescence color LCD in accordance with the invention which is backlit by blue light; and
Figure 6 is a schematic cross-sectional representation of another photo-luminescent color LCD in accordance with the invention which is backlit by a UV plasma discharge.

### DETAILED DESCRIPTION OF THE INVENTION

Disclosed herein is a novel color rendering scheme designed to improve and enhance the brightness and sharpness of an electronic display, such as a liquid crystal display (LCD). Embodiments of the present invention incorporate two key components: 1) a red-green (RG) or red-green-blue (RGB) phosphor panel, and 2) a monochromatic or quasi-monochromatic short-wavelength light source for exciting the RGB phosphors of the RG phosphor panel as defined in the appended claims. These components replace the color-filter panel and the broadband white light source, respectively, which have been traditionally used in prior art LCDs.

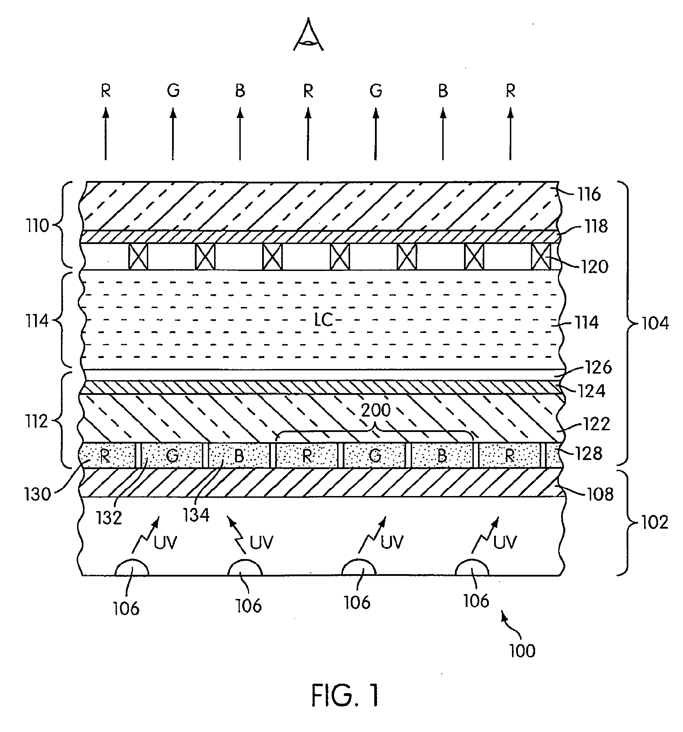

Referring to Figure 1 there is shown a schematic cross-sectional representation of a photo-luminescence color LCD 100 according to a first embodiment of the invention. The LCD 100 comprises a display panel 104 and a backlighting unit 102.

The backlighting unit 102 comprises either a single excitation radiation source or a plurality of sources 106 and a light diffusing plane 108. Each radiation source 106 may be monochromatic or quasi-monochromatic, that is operable to emit excitation radiation of a narrow wavelength range/color. In the arrangement of Figure 1 the, or each, excitation source 106 comprises a UV emitting LED (wavelength range 360 to 400 nm); in alternative examples not falling under the scope of the appended claims, a UV emitting lamp (254 nm), plasma discharge (147 to 190 mn) or light sources such as UV discharges of inert gas filled arc lamps may be used. The light diffusing plane 108 ensures the display panel 104 is substantially evenly irradiated with excitation radiation over its entire surface.

The display panel 104 comprises a transparent front (light/image emitting) plate 110, a transparent back plate 112 and a liquid crystal (LC) 114 filling the volume between the front and back plates. The front plate 110 comprises a glass plate 116 having on its underside, that is the face of the plate facing the LC 114, a first polarizing filter layer 118 and then a thin film transistor (TFT) layer 120. The back plate 112 comprises a glass plate 122 having a second polarizing filter layer 124 and a transparent common electrode plane 126 (for example transparent indium tin oxide, ITO) on its upper surface facing the LC and a phosphor color-elements plate 128 on its underside facing the backlighting unit 102. As will be described the phosphor color-elements plate 103 comprises an array of different phosphors 130, 132, 134 which emit red (R), green (G), and blue (B) light respectively in response to UV excitation radiation from the backlighting unit 102. The TFT layer 120 comprises an array of TFTs, wherein there is a corresponding transistor to each individual color phosphor sub-pixel 130, 132, 134 of each pixel unit 200 of the phosphor color-elements plate 128. As is known, the directions of polarization of the two polarizing filters 118, 124 are aligned perpendicular to one another.

The RGB phosphors 130, 132, 134 function in such a manner that the result is similar to that which the color filters of prior art LCD devices achieve, each RGB pixel being capable of producing a range of colors. The difference between the prior art color filters and the presently disclosed RGB phosphors is that color filters only allow certain wavelengths of light to pass through them, whereas phosphors generate a selected wavelength (color) of light in response to excitation by LAV radiation from the backlighting unit. Stated another way, color filters allow only light within a certain range of wavelengths to be transmitted, whereas the RBG phosphors emit light of different colors, with a certain spectral width centered at a peak wavelength.

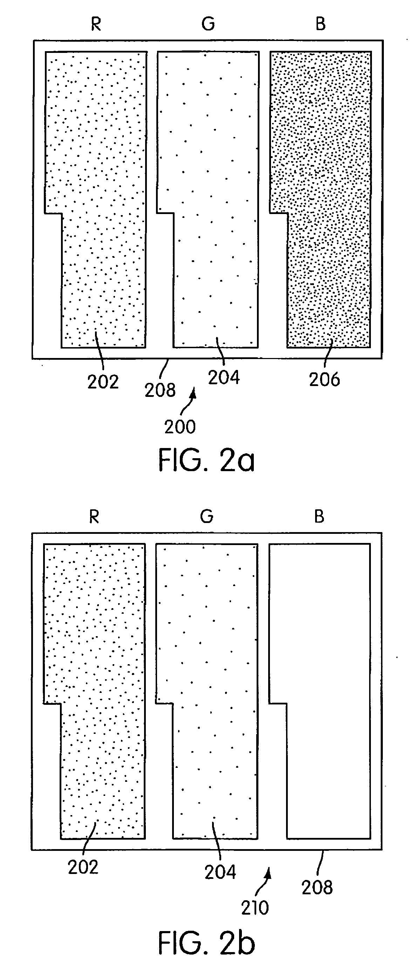

The RGB phosphors can be packaged/configured on the color plate 128 in a manner similar to the way in which the color filters of the prior art displays are configured. This is illustrated in Figure 2a which shows a unit pixel 200 of the phosphor color-element plate 128 comprising a sub-pixel triplet filled by three phosphors 202, 204, 206 with emissions centered at the primary red (R), green (G), and blue (B) colors for UV excited phosphors. A grid mask (also termed a black matrix) 208 of metal, such as for example chromium, defines the phosphor color blocks 202, 204, 206 and provides an opaque gap between the phosphor sub-pixels and unit pixels. Additionally the black matrix shields the TFTs from stray light and prevents crosstalk between neighboring sub-pixels/unit pixels. To minimize reflection from the black matrix 208, a double layer of Cr and CrOx may be used, but of course, the layers may comprise materials other than Cr and CrOx. The black matrix film which can be sputter-deposited underlying or overlying the phosphor material may be patterned using methods that include photolithography.

There are a variety of ways in which the RGB phosphors can be incorporated into/onto the glass plate 122. Typically, most phosphor materials are hard substances, and the individual particles may have a variety of irregular shapes. It can be difficult to incorporate them directly into plastic resins, however, phosphors are known to be compatible with acrylic resins, polyesters, epoxies, polymers such as polypropylene and high and low density polyethylene (HDPE, LDPE) polymers. Materials may be cast, dipped, coated, extruded or molded. In some embodiments it may be preferable to use master batches for incorporating the phosphor-containing materials into clear plastics, which may then be coated onto the glass plate 122. In reality, any of the methods that are used for fabricating plasma display panels having RGB phosphor-containing pixel matrices, such methods being screen printing, photolithography, and ink printing techniques, may also be used to fabricate the present phosphor color plate 128.

There are a variety of compositions available for the red, green, and blue phosphors of the RGB phosphor color-element plate 128. The host material according to the invention is an oxide, and may comprise an aluminate, silicate, or phosphate doped with a rare-earth element called an activator. The activator for the red and green phosphors according to the invention includes divalent europium, but the activator for blue phosphors in accordance with the invention is not limited to divalent europium. Dopants such as halogens are substitutionally or interstitially incorporated into the crystal lattice for red and green phosphors according to the invention and can for example reside on oxygen lattice sites of the host material and/or interstitially within the host material. Examples of suitable phosphor composition along with the range of wavelengths at which they may be excited is given in Table 1.

**Table 1 Chemical formulae of example phosphor compositions**

| Source | Excitation wavelength | phosphor Composition | | |
|---|---|---|---|---|
| | | Blue | Green | Red |
| Blue LED | 400-480nm | - | (Sr, Ba, Mg)₂SiO₄:Eu²⁺,F | (Sr, Ba, Mg, Al)₃SiO₅:Eu²⁺,F |
| UV LED | 360-400nm | BaMgAl₁₀O₁₇:Eu (Sr,Ca,Ba,Mg)₁₀(PO₄)₈Cl₂: Eu (Ba,Sr,Eu)(Mg,Mn)Al₁₀O₁₇ Sr₁₀(PO₄)₆Cl₂:Eu (Ba,Eu)MgAl₁₀O₁₇ | (Sr,Ba,Mg)₂SiO₄:Eu²⁺,F(Ba,Eu)(Mg,Mn)Al₁₀O₁₇ | (Sr,Ba,Mg,Al)₃SiO₅:Eu²⁺,F Ca₂NaMg₂V₃O₁₂: Eu³⁺ YVO₄:Eu |
| UV | 254nm | (SrCaBaMg)₅(PO₄)₃Cl:Eu (Ba, Eu) Mg₂Al₁₆O₂₇ (BaSr,Eu)(MgMn)Al₁₀O₁₇ Sr₁₀(PO₄)₆Cl₂:Eu (Ba,Eu)MgAl₁₀O₁₇ | LaPO₄:Ce,Tb (Ce,Tb) MgAl₁₁O₁₉ (Ba,Eu)(Mg,Mn)Al₁₀O₁₇ | Y₂O₃:Eu YVO₄:Eu |
| PDP | 147∼190nm ) | BaMgAl₁₀O₁₇:Eu | Zn₂SiO₄:Mn | (Y,Gd)BO₃:Eu |

An advantage of the LCD of the present invention, when the radiation source is a UV LED as defined in claim 1, is the prolonged life of the LC, provided the phosphor color-element plate is provided on the backlighting unit side of the LC, since this arrangement prevents UV activation light reaching the LC and causing degradation. Placing the excitation light source next to the phosphor coated color panel enhances the quantum efficiency of the display panel if the UV absorption of the liquid crystal material severely attenuates the excitation intensity.

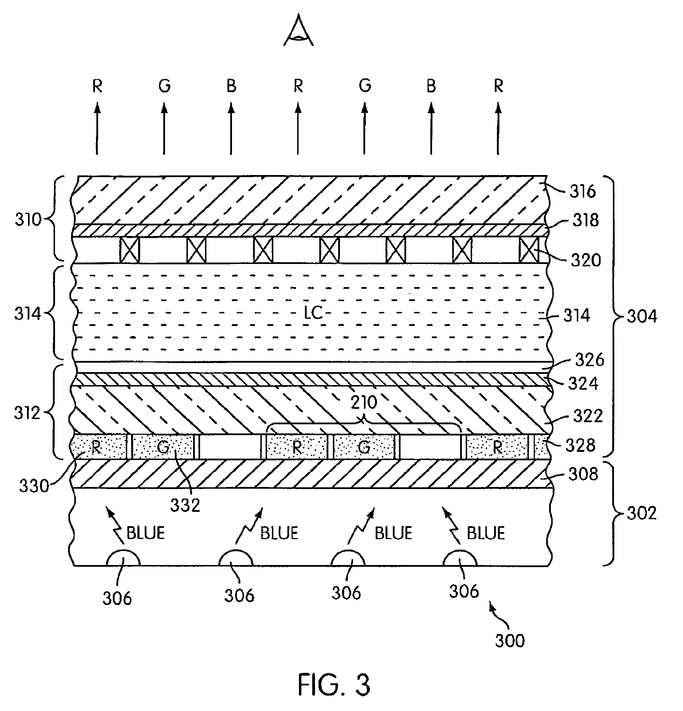

Figure 3 illustrates an alternative color LCD 300 in accordance with the invention which uses blue light (400 to 480 nm) activated phosphors. For example the LC 114 of Figure 1 is denoted 314 in Figure 3. In contrast to the LCD 100 the backlighting unit 302 incorporates blue light emitting diodes (LEDs) 306 for exciting red and green phosphor sub-pixels 330, 332 respectively. Figure 2b is a unit pixel 210 of the phosphor color-element plate 328. The unit pixel 210 includes two blue light excitable phosphors 202, 204 emitting red (R) and green (G) light respectively, and the third sub-pixel 208 left empty, that is without the inclusion of a phosphor, to allow the transmission of blue light from a blue emitting LED backlighting unit 302. In this case, monochromatic or quasi-monochromatic backlighting unit 302 serves a dual purpose; firstly it generates blue excitation radiation to excite the red and green phosphors, and second, to provide the blue portion of the backlighting light.

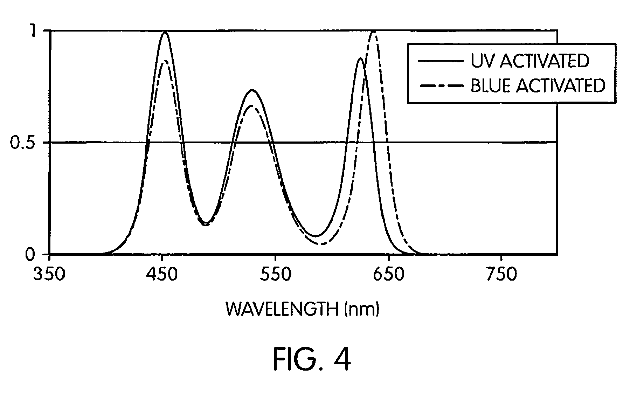

Exemplary emission spectra from red, green, and blue phosphors are shown schematically in Figure 4. Exemplary monochromatic and/or quasi-monochromatic light sources (backlighting units) 107, 307 that would lead to such emission are ultraviolet (UV) light emitting diodes (LEDs), and single or multiple sharp line emissions from UV lamps such as, but not limited to, the 256 nm line from a mercury lamp.

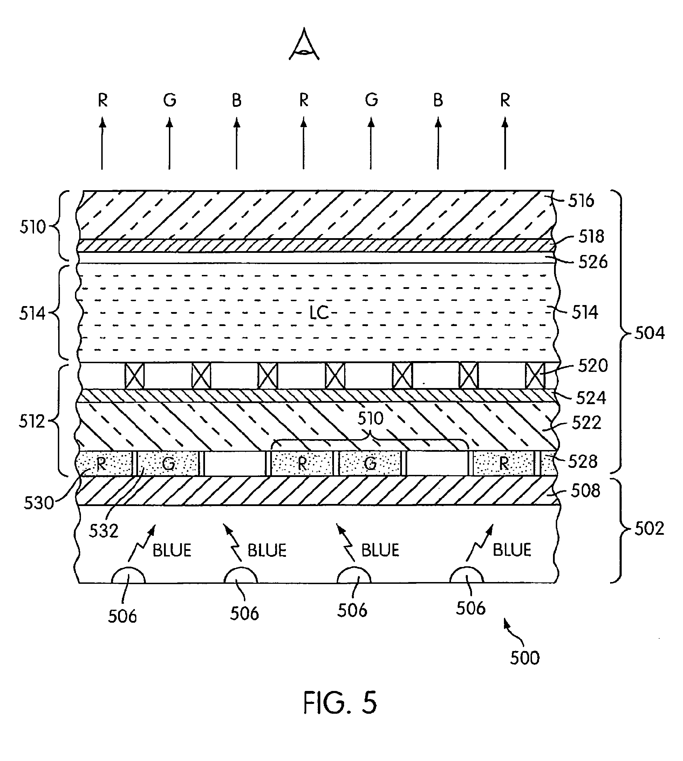

In a further embodiment, as illustrated in Figure 5, the back plate 512 includes both the TFT plate 520 and phosphor color-element plate 528. In this arrangement the TFT plate 520 is provided on the second polarizing filter 524 on the upper surface of the glass plate 522 facing the LC, and the phosphor color plate 528 is provided on the opposite lower face of the glass plate. In the embodiment illustrated the backlighting unit 502 comprises a blue light excitation source and can comprise one or more blue emitting LEDs 506. As with the embodiment of Figure 3 only red 530 and green 532 phosphor sub-pixels are incorporated in the phosphor color-element plate 528, the blue excitation light also serving as the third of the three primaries that are essential to color rendering.

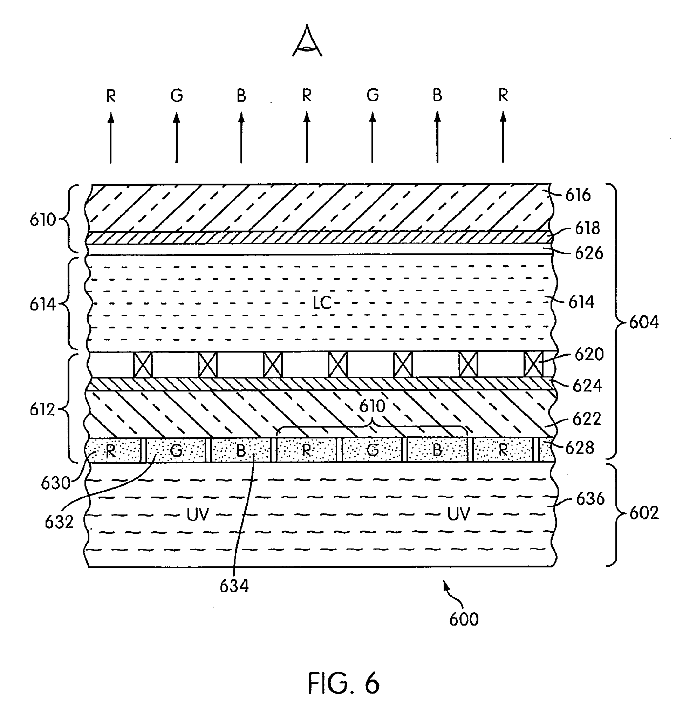

Figure 6 illustrates an LCD 600 in accordance with an example not falling under the scope of the claims . In Figure 6, UV excitation irradiation is generated by a plasma discharge 636 of a gas such as Hg, Xe, or Ne, and the plasma 636 used to excite the RGB phosphors 630, 632, and 634 in a similar fashion to the way in which phosphor emission takes place in a plasma display panel (PDP). However, the difference between the embodiment illustrated in Figure 6 and a PDP is that in the present embodiment there is only a single plasma source providing a collective excitation to all phosphor coloring elements. This is in contrast to plasma display technology, in which there are provided the same number of plasma sources as there are phosphor pixels, and where each individual phosphor pixel is excited by its own plasma source.

In further embodiments, not illustrated, the phosphor color plate can be provided as part of the front plate that is on an opposite side of the liquid crystal to the backlighting unit. In such an arrangement the TFTs plate can be provided on the front or back plates.

It will be appreciated that the present invention is not restricted to the specific embodiments described and that variations can be made as long as they are within the scope of the invention as defined by the appended claims. For example whilst for ease of fabrication the phosphor color-element plate can be fabricated on a lower side of the back plate, in other arrangements it can be provided on the upper surface of the back plate and the first polarizing filter provided on top of the color-element plate.

LCDs in accordance with invention are expected to produce a spectacular, vivid range of colors rivaling plasma display panel (PDP) technology. It is known that color filters are a key component in LCDs for sharpening color, although they account for as much as 20 per cent of the manufacturing cost. Significant cost reduction is expected with the present embodiments, particularly when an array of blue LEDs is used to provide backlighting, because only two thirds of the pixel area need to be coated with a phosphor.

In addition, LEDs are the preferred choices as backlighting excitation sources because they are expected to have longer lifetimes than other light sources. LEDs are more durable because there is no filament to burn out, no fragile glass tube to shatter, no moving parts to protect, and a cooler operating temperature. In fact, the lifespan of a LED is estimated to be twice as long as the best fluorescent bulbs. By adjusting the number and density of the LEDs, high brightness values can be achieved without significantly diminishing the life expectancy of the liquid crystal displays. Moreover, LEDs are more efficient with lower power consumption.

The demand for more efficient backlighting has been steadily increasing. The current LCD technology that employs color filters has only about a 10 to 20 per cent efficiency of light output that is achievable at the front of a liquid crystal display. By contrast, the present embodiments using an RGB phosphor-based color rendering scheme, including using red-green phosphor elements plus blue LED illumination, can have up to 90 per cent efficiency of light output. Moreover, television sets having liquid crystal displays with phosphor pixels might also provide very wide horizontal and vertical viewing angles.

## Claims

1. A photo-luminescence liquid crystal display (100) comprising: a display panel (102) and a radiation source (106) for generating excitation radiation for operating the display; wherein the display panel comprises transparent front (110) and back (112) plates; a liquid crystal (114) disposed between the front (110) and back (112) plates; a matrix of electrodes (120) defining red, green and blue pixel areas of the display and operable to selectively induce an electric field across the liquid crystal in the pixel areas for controlling transmission of light through the pixels areas; a red phosphor material (130) which emits red light in response to excitation radiation, the red phosphor material being provided on the back plate (112) or as part of the front plate (110) corresponding to red pixel areas and a green phosphor material (132) which emits green light in response to excitation radiation, the green phosphor material being provided on the back plate (112) or as part of the front plate (110) corresponding to green pixel areas, wherein the radiation source (106) is a light emitting diode that emits blue light having a wavelength in a range of 400 to 480 nm and the red phosphor has a formula (Sr,Ba,Mg,Al)₃SiO₅:Eu²⁺,F; the green phosphor has a formula (Sr,Ba,Mg)₂SiO₄:Eu²⁺,F; or,
wherein the radiation source (106) is a UV emitting light emitting diode that emits light having a wavelength in a range 360 to 400 nm and the green phosphor has a formula (Sr,Ba,Mg₂SiO₄:Eu²⁺,F, the red phosphor is selected from the group consisting of (Sr,Ba,Mg,Al)₃SiO₅:Eu²⁺,F; Ca₂NaMg₂V₃O₁₂:Eu³⁺ and YVO₄:Eu and the liquid crystal display (100) further comprises a blue phosphor material (134) corresponding to blue pixel areas and operable to emit blue light in response to the excitation radiation, wherein the blue phosphor material (134) is selected from the group consisting of: BaMgAl₁₀O₁₇:Eu; (Sr,Ca,Ba,Mg)₁₀(PO₄)₆Cl₂:Eu; (Ba,Sr,Eu)(Mg,Mn)Al₁₀O₁₇; Sr₁₀(PO₄)₆Cl₂:Eu; and (Ba,Eu)MgAl₁₀O₁₇.

2. The liquid crystal display (100) according to Claim 1 in which the matrix of electrodes (120) comprises an array of thin film transistors, one thin film transistor corresponding to each pixel.

3. The liquid crystal display (100) of Claim 2, wherein the thin film transistors are provided on the front plate (110).

4. The liquid crystal display (100) of Claim 2 wherein the thin film transistors are provided on the back plate (112).

5. The liquid crystal display (100) according to Claim 1, wherein the phosphor materials are provided on a lower face of the back plate (112).

6. The liquid crystal display (100) according to Claim 1, wherein the phosphor materials are provided on an upper face of the back plate (112).

7. The liquid crystal display (100) according to Claim 1, further comprising a first polarizing filter layer (118) on the front plate (110) and a second polarizing filter layer (124) on the back plate (112) and wherein the orientation of the direction of polarization of the first polarizing filter layer (118) is perpendicular to the direction of polarization of the second polarizing filter layer (124).

## Patentansprüche

1. Fotolumineszenz-Flüssigkristalldisplay (100), umfassend: ein Displaypanel (102) und eine Strahlungsquelle (106) zum Generieren von Anregungsstrahlung zum Betreiben des Displays; wobei das Displaypanel eine transparente vordere (110) und hintere (112) Platte umfasst; einen Flüssigkristall (114), angeordnet zwischen der vorderen (110) und hinteren (112) Platte; eine Matrix aus Elektroden (120), die rote, grüne und blaue Pixelbereiche des Displays definieren und zum selektiven Induzieren eines elektrischen Felds an dem Flüssigkristall in den Pixelbereichen zum Steuern der Transmission von Licht durch die Pixelbereiche betrieben werden können; ein rotes Leuchtstoffmaterial (130), das als Reaktion auf Anregungsstrahlung rotes Licht emittiert, wobei das rote Leuchtstoffmaterial auf der hinteren Platte (112) oder als Teil der vorderen Platte (110) entsprechend roten Pixelbereichen vorgesehen ist, und ein grünes Leuchtstoffmaterial (132), das als Reaktion auf Anregungsstrahlung grünes Licht emittiert, wobei das grüne Leuchtstoffmaterial auf der hinteren Platte (112) oder als Teil der vorderen Platte (110) entsprechend grünen Pixelbereichen vorgesehen ist, wobei die Strahlungsquelle (106) eine Leuchtdiode ist, die blaues Licht mit einer Wellenlänge in einem Bereich von 400 bis 480 nm emittiert, und der rote Leuchtstoff eine Formel (Sr,Ba,Mg,Al)₃SiO₅:Eu²⁺,F aufweist; der grüne Leuchtstoff eine Formel (Sr,Ba,Mg)₃SiO₄:Eu²⁺,F aufweist oder
wobei die Strahlungsquelle (106) eine UV-emittierende Leuchtdiode ist, die Licht mit einer Wellenlänge in einem Bereich von 360 bis 400 nm emittiert und der grüne Leuchtstoff eine Formel (Sr,Ba,Mg)₂SiO₄:Eu²⁺,F aufweist, der rote Leuchtstoff ausgewählt ist aus der Gruppe bestehend aus: (Sr,Ba,Mg,Al)₃SiO₅:Eu²⁺,F; Ca₂NaMg₂V₃O₁₂:Eu³⁺ und YVO₄:Eu und das Flüssigkristalldisplay (100) weiterhin ein blaues Leuchtstoffmaterial (134) entsprechend blauen Pixelbereichen und betätigbar zum Emittieren von blauem Licht als Reaktion auf die Anregungsstrahlung umfasst, wobei das blaue Leuchtstoffmaterial (134) ausgewählt ist aus der Gruppe bestehend aus: BaMgAl₁₀O₁₇:Eu; (Sr,Ca,Ba,Mg)₁₀(PO₄)₆Cl₂:Eu; (BA,Sr,Eu)(Mg,Mn)Al₁₀O₁₇; Sr₁₀(PO₄)₆Cl₂:Eu und (Ba,Eu)MgAl₁₀O₁₇.

2. Flüssigkristalldisplay (100) nach Anspruch 1, bei dem die Elektrodenmatrix (120) ein Array aus Dünnschichttransistoren umfasst, wobei jedem Pixel ein Dünnschichttransistor entspricht.

3. Flüssigkristalldisplay (100) nach Anspruch 2, wobei die Dünnschichttransistoren auf der vorderen Platte (110) vorgesehen sind.

4. Flüssigkristalldisplay (100) nach Anspruch 2, wobei die Dünnschichttransistoren auf der hinteren Platte (112) vorgesehen sind.

5. Flüssigkristalldisplay (100) nach Anspruch 1, wobei die Leuchtstoffmaterialien auf einer unteren Fläche der hinteren Platte (112) vorgesehen sind.

6. Flüssigkristalldisplay (100) nach Anspruch 1, wobei die Leuchtstoffmaterialien auf einer oberen Fläche der hinteren Platte (112) vorgesehen sind.

7. Flüssigkristalldisplay (100) nach Anspruch 1, weiterhin umfassend eine erste Polarisationsfilterschicht (118) auf der vorderen Platte (110) und eine zweite Polarisationsfilterschicht (124) auf der hinteren Platte (112) und wobei die Orientierung der Polarisationsrichtung der ersten Polarisationsfilterschicht (118) senkrecht zu der Polarisationsrichtung der zweiten Polarisationsfilterschicht (124) verläuft.

## Revendications

1. Affichage à cristaux liquides à photoluminescence (100) comprenant : un panneau d'affichage (102) et une source de rayonnement (106) pour générer un rayonnement d'excitation pour le fonctionnement de l'affichage ; dans lequel le panneau d'affichage comprend des plaques avant (110) et arrière (112) transparentes ; un cristal liquide (114) disposé entre les plaques avant (110) et arrière (112) ; une matrice d'électrodes (120) définissant des zones de pixels rouges, vertes et bleues de l'affichage et qui est à même d'induire sélectivement un champ électrique à travers le liquide dans les zones de pixels pour commander la transmission de lumière à travers les zones de pixels ; un matériau phosphorescent rouge (130) qui émet de la lumière rouge en réponse au rayonnement d'excitation, le matériau luminescent rouge étant aménagé sur la plaque arrière (112) ou comme partie de la plaque avant (110) correspondant aux zones de pixels rouges, et un matériau phosphorescent vert (132) qui émet de la lumière verte en réponse au rayonnement d'excitation, le matériau phosphorescent vert étant aménagé sur la plaque arrière (112) ou comme partie de la plaque avant (110) correspondant aux zones de pixels vertes, dans lequel la source de rayonnement (106) est une diode électroluminescente qui émet de la lumière bleue ayant une longueur d'onde dans une plage de 400 à 480 nm et le matériau phosphorescent rouge répond à la formule (Sr,Ba,Mg,Al)₃SiO₅:Eu²⁺,F ; le matériau phosphorescent vert répond à la formule (Sr,Ba,Mg)₂SiO₄:EU²⁺, F ; ou,
dans lequel la source de rayonnement (106) est une diode électroluminescente émettant des rayons UV émettant de la lumière d'une longueur d'onde dans une plage de 360 à 400 nm et le matériau phosphorescent vert répond à la formule (Sr,Ba,Mg)₂SiO4:Eu²⁺,F, le matériau phosphorescent rouge est sélectionné dans le groupe constitué des composés de formules (Sr,Ba,Mg,Al)₃SiO₅:Eu²⁺,F ; Ca₂NaMg₂V₃O₁₂:Eu³⁺et YVO₄:Eu et l'affichage à cristaux liquides (100) comprend en outre un matériau phosphorescent bleu (134) correspondant à des zones de pixels bleues et qui est à même d'émettre de la lumière bleue en réponse au rayonnement d'excitation, le matériau phosphorescent bleu (134) étant sélectionné dans le groupe constitué des composés de formules BaMgAl₁₀O₁₇:Eu ; (Sr,Ca,Ba,Mg)₁₀(PO₄)₆Cl₂:Eu ; (Ba,Sr,Eu) (Mg,Mn)Al₁₀O₁₇; Sr₁₀(PO₄)₆Cl₂:Eu ; et (Ba,Eu)MgAl₁₀O₁₇.

2. Affichage à cristaux liquides (100) selon la revendication 1, dans lequel la matrice d'électrodes (120) comprend un réseau de transistors à couche mince, un transistor à couche mince correspondant à chaque pixel.

3. Affichage à cristaux liquides (100) selon la revendication 2, dans lequel les transistors à couche mince sont aménagés sur la plaque avant (110).

4. Affichage à cristaux liquides (100) selon la revendication 2, dans lequel les transistors à couche mince sont aménagés sur la plaque arrière (112).

5. Affichage à cristaux liquides (100) selon la revendication 1, dans lequel les matériaux phosphorescents sont aménagés sur une face inférieure de la plaque arrière (112).

6. Affichage à cristaux liquides (100) selon la revendication 1, dans lequel les matériaux phosphorescents sont aménagés sur une face supérieure de la plaque arrière (112).

7. Affichage à cristaux liquides (100) selon la revendication 1, comprenant en outre une première couche de filtre polarisateur (118) sur la plaque avant (110) et une seconde couche de filtre polarisateur (124) sur la plaque arrière (112) et dans lequel l'orientation de la direction de polarisation de la première couche de filtre polarisateur (118) est perpendiculaire à la direction de polarisation de la seconde couche de filtre polarisateur (124).
